# EUROPÄISCHE PATENTANMELDUNG

(11) **EP 2 835 786 A1**
(43) Veröffentlichungstag der Anmeldung: **11.02.2015**
(21) Anmeldenummer: 13179391.1
(22) Anmeldetag: 06.08.2013
(51) Int. Cl.: G07B 15/02

(54) **Verfahren zur fortlaufenden Erfassung der Anwesenheit einer Person in einem öffentlichen Verkehrsmittel**

(71) Anmelder: SKIDATA AG, 5083 Grödig/Salzburg (AT)
(72) Erfinder: Surkau, Reinhard, 5083 Grödig/Salzburg (AT); Egli, Charles, 1033 Cheseaux (CH); Fer, François, 35510 Cesson Sévigné (FR)
(74) Vertreter: Karakatsanis, Georgios

(57) **Zusammenfassung**

Es wird ein Verfahren zur fortlaufenden Erfassung der Anwesenheit einer Person in einem öffentlichen Verkehrsmittel vorgeschlagen, wobei der Person ein Kundenmedium zugeordnet ist, welches einen RF-Transceiver umfasst, wobei im Verkehrsmittel pro Fahrgastraum bzw. Wagen zumindest eine Leseeinrichtung zur Datenkommunikation mit den Kundenmedien vorgesehen ist, welche mit einem als On-Board-Unit dienenden Computer zum Zweck der Datenkommunikation verbunden ist, wobei für den Fall, dass mehrere Leseeinrichtungen vorgesehen sind, diese auch miteinander verbunden sind, wobei wenn mehrere Fahrgasträume oder Wägen vorhanden sind, einem Fahrgastraum oder Wagen eine als Haupt-On-Board-Unit dienende On-Board-Unit zugeordnet ist und den anderen Fahrgasträumen oder Wägen als Neben-On-Board-Units dienende On-Board-Units zugeordnet sind, die mit der Haupt-On-Board-Unit zum Zweck der Datenkommunikation verbunden sind, wobei sich das Kundenmedium beim Betreten des Verkehrsmittels in einem "Sleep"-Modus befindet, um den Energieverbrauch möglichst gering zu halten.

## Beschreibung

Die vorliegende Erfindung bezieht sich auf ein Verfahren zur fortlaufenden Erfassung der Anwesenheit einer Person in einem öffentlichen Verkehrsmittel gemäß dem Oberbegriff des Patentanspruchs 1. Insbesondere bezieht sich die Erfindung auf ein Verfahren zur Realisierung eines "Be-in-be-out"-Ticket-Erfassungssystems.

"Be-in-be-out"-Ticket-Erfassungssysteme erfreuen sich steigender Beliebtheit, da sie den Passagieren von öffentlichen Verkehrsmitteln den größtmöglichen Komfort bieten. Im Rahmen derartiger Systeme soll die Aufenthaltsdauer eines Passagiers in einem öffentlichen Verkehrsmittel ermittelt werden und mit der innerhalb dieser Zeit zurückgelegten Strecke in Verbindung gebracht werden. Im Gegensatz dazu wird bei "check-in-check-out"-Systemen das Ticket beim Ein- und Aussteigen eines Passagiers erfasst.

Der vorliegenden Erfindung liegt die Aufgabe zugrunde, ein Verfahren zur fortlaufenden Erfassung der Anwesenheit einer Person in einem öffentlichen Verkehrsmittel, insbesondere ein Verfahren zur Realisierung eines "Be-in-be-out"-Ticket-Erfassungssystems anzugeben, durch dessen Durchführung die Anwesenheit der Person in einem öffentlichen Verkehrsmittel mit möglichst geringem konstruktiven Aufwand und mit hoher Datensicherheit und Wahrscheinlichkeit erfasst werden kann.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zur fortlaufenden Erfassung der Anwesenheit einer Person in einem öffentlichen Verkehrsmittel vorgeschlagen, im Rahmen dessen der Person ein Kundenmedium zugeordnet ist, welches einen RF-Transceiver umfasst, wobei im Verkehrsmittel pro Fahrgastraum bzw. Wagen zumindest eine, vorzugsweise mehrere Leseeinrichtungen zur Datenkommunikation mit den Kundenmedien vorgesehen sind, welche miteinander und mit einem als On-Board-Unit dienenden Computer vorzugsweise über einen CAN-Bus verbunden sind.

Das Kundenmedium weist vorzugsweise eine eigene Stromversorgung auf. Im Rahmen weiterer Ausführungsformen ist das Kundenmedium derart ausgeführt, dass es über einen HF-Puls, der von der zumindest einen Leseeinrichtung ausgestrahlt wird, mit Energie geladen wird, somit die benötigte Energie aus dem Feld der Leseeinrichtung bezieht und anschließend für eine vorgegebene Zeit autark arbeiten kann. Zu diesem Zweck weist das Kundenmedium einen Kondensator zum Speichern der Energie und einen entsprechenden Schaltkreis auf. Der Puls ist vorzugsweise ein Puls im UHF - Bereich, beispielsweise ein Puls mit der Frequenz von 433 MHz, 860 bis 960 MHz, 2,4 GHz. Auch ist es möglich, genügend Energie beim Durchgang durch ein Gate am Eingang des Transportmittels in Form von 13 MHz Magnetfeldern zur Verfügung zu stellen.

Für den Fall, dass mehrere Fahrgasträume oder Wägen vorhanden sind, ist einem Fahrgastraum oder Wagen eine als Haupt-On-Board-Unit dienende On-Board-Unit zugeordnet, wobei den anderen Fahrgasträumen oder Wägen als Neben-On-Board-Units dienende On-Board-Units zugeordnet sind, wobei die Neben-On-Board-Units mit der Haupt-On-Board-Unit zum Zweck der Datenkommunikation verbunden sind. Die Leseeinrichtungen im Sinne der Erfindung können das Kundenmedium auch beschreiben bzw. Informationen und Befehle an das Kundenmedium senden.

Beim Betreten des Verkehrsmittels befinden sich die Kundenmedien in einem "Sleep"-Modus, wobei im Sleep-Modus im Wesentlichen keine elektrische Aktivität stattfindet, wodurch für den Fall einer eigenen Energieversorgung des Kundenmediums die Batterie, welche das Kundenmedium mit Energie versorgt, kaum belastet wird. Die On-Board-Unit des Fahrgastraums sendet in regelmäßigen Intervallen im Rahmen einer Aufweck-Phase ein "Wake-up"-Signal, welches sequentiell von allen Leseeinrichtungen, welche mit der On-Board-Unit verbunden sind, ausgestrahlt wird. Wenn das Kundenmedium dieses Signal empfängt, führt dies bei einem als gültig erkannten "Wake-up" - Signal zur Aktivierung des Kundenmediums und somit zum Verlassen des Sleep-Modus.

Für den Fall, dass das Kundenmedium keine eigene Energieversorgung aufweist, kann das "Wake - Up" Signal" im HF-Puls enthalten sein. Ferner kann für den Fall, dass das Kundenmedium keine eigene Energieversorgung aufweist vorgesehen sein, dass in regelmäßigen, vorgegebenen Zeitintervallen von der zumindest einen Leseeinrichtung ein HF-Signal ausgestrahlt wird, um die sich in Reichweite befindlichen Kundenmedien mit Energie zu versorgen.

Anschließend werden vom Kundenmedium Daten zur Berechnung einer Session-ID gesendet, welche von der zumindest einen Leseeinrichtung empfangen und über das Bussystem, über das die zumindest eine Leseeinrichtung mit der On-Board-Unit verbunden sind, an die On-Board-Unit im Fahrgastraum gesendet werden.

Die Berechnung der Session ID beruht vorzugsweise auf dem bekannten "Challenge Response"-Verfahren. Entsprechend antwortet die On-Board-Unit nach Empfang des ersten Datensatzes von dem Kundenmedium mit einem weiteren Datensatz. Jeweils werden beide Datensätze mit nur in dem Kundenmedium und in der On-Board-Unit vorliegenden weiteren Informationen (Algorithmen, Schlüssel) verrechnet und daraus die Session-ID bestimmt. Einem mithörenden Dritten sind die nur in dem Kundenmedium oder der On-Board-Unit vorhandenen Informationen fremd, so dass letztendlich mit der Session-ID ein nur dem Kundenmedium und der On-Board-Unit bekannter Datensatz vorliegt. Dieser wird für weitere Absicherungen wie Authentifizierungen herangezogen. Nach erfolgter Berechnung der Session-ID kann vom Kundenmedium eine Medieninformation gesendet werden, durch die das Kundenmedium eineindeutig identifiziert wird und welche herangezogen werden kann, um festzustellen, ob beispielsweise eine Berechtigung für eine bestimmte Fahrt vorliegt.

Vorzugsweise erfolgt die Kommunikation zwischen der On-Board-Unit und dem Kundenmedium verschlüsselt und optional signiert, wobei die Verschlüsselung für jedes Kundenmedium unterschiedlich ist. Hierbei kann im Rahmen einer Weiterbildung der Erfindung vor Beginn der eigentlichen Kommunikation zwischen der On-Board-Unit und dem Kundenmedium eine gegenseitige Authentifizierung durchgeführt werden, so dass dieses Kundenmedium in der On-Board-Unit als bekannt und authentifiziert markiert ist, wobei im Rahmen der Authentifizierung zwischen dem Kundenmedium und einer On-Board-Unit eine sichere Verbindung aufgebaut wird, so dass die benötigten Informationen des Kundenmediums sicher und unabstreitbar übertragen werden können. Das Kundenmedium ist über die Session-ID eindeutig erkannt, wobei die Session-ID für die Dauer einer gültigen Authentifizierung gilt und unabhängig von den weiteren übertragenen Informationen ist. Die Unabstreitbarkeit ergibt sich aus der zusätzlichen Verwendung eines Zeitstempels in der Signierung. Dieser Zeitstempel wird pro Kommunikation inkrementiert, so dass jede Nachricht, die zusätzlich signiert ist, einen einzigartigen, abgesicherten Datensatz darstellt.

Vorzugsweise umfasst das Kundenmedium eine erste, eine zweite und eine dritte Antenne, die auf einem PCB-Substrat ausgeführt sind. Die Antennen des Kundenmediums können als Dipole, gefaltete Dipole, "inverted F"-Antennen, Quadrupol-Antennen, ähnlich Patch-Antennen oder Antennenschleifen und -spulen ausgeführt sein.

Hierbei ist die erste Antenne vorzugsweise für den Bereich 13 MHz - 8 GHz ausgelegt und dient als Wake-up-Antenne zum Empfangen eines Wake-up-Signals, wenn sich das Kundenmedium in einem "Sleep"-Modus befindet. Das Wake-up-Signal wird vorzugsweise amplitudenmoduliert gesendet und enthält eine vorgegebene Signalfolge, wobei das von der Wake-up-Antenne empfangene Signal von einem als Wake-up-Erfassungsmodul dienenden Operationsverstärker verstärkt und demoduliert und von einem im "Sleep-Modus" teilweise aktivierten Mikroprozessor ausgewertet wird, wobei für den Fall eines als gültig erkannten Wake-up-Signals, d.h. eines Signals mit der richtigen Sequenz, der Mikroprozessor vollständig aktiviert wird und der Tranceiver des Kundenmediums eingeschaltet wird, wodurch das Kundenmedium in einen Aktiv-Modus übergeht. Der Operationsverstärker ist die einzige Komponente des Kundenmediums, die im "Sleep"- Modus vollständig aktiv ist und ist derart ausgeführt, dass er einen minimalen Stromverbrauch aufweist. Im "Sleep-Modus" ist zudem lediglich ein Teil des Mikroprozessors aktiviert. Das Kundenmedium weist zudem einen Ruhe-Modus auf, bei dem nur der Mikroprozessor aktiv ist, um den Übergang in den "Sleep"-Modus oder in den Aktiv-Modus gemäß vorgegebener Routinen zu steuern. Der Mikroprozessor des Kundenmediums weist demnach unterschiedliche Aktivitätsmodi auf.

Die zweite Antenne empfängt und sendet vorzugsweise im Bereich 2,4 GHz-8 GHz GHz und ist mit einem RF Tranceiver verbunden, wobei der Tranceiver nur dann aktiviert wird, wenn sich das Kundenmedium im Aktiv-Modus befindet. Die Bitrate des Tranceivers beträgt vorzugsweise 1 oder 2 Mbit/s. Über den Tranceiver kann die Daten-Kommunikation mit entsprechenden Leseeinrichtungen über mehrere Kanäle mit leicht unterschiedlichen Frequenzen oder mit Breitband-Signalen durchgeführt werden, um auf diese Weise Kollisionen mit fremden Diensten zu vermeiden und eine schnelle Kontaktaufnahme zu ermöglichen.

Um ein Risiko der Störung während der Datenübertragung zu reduzieren, wird durch den Tranceiver ein laufendes Wechseln der Datenkanäle ermöglicht (frequency hopping). Beispielsweise können zur Datenübertragung über die zweite Antenne im 2,4 GHz-Band drei "advertising channels" zur Kontaktaufnahme mit einer Leseeinrichtung und fünf "communication channels" zur Datenkommunikation mit der Leseeinrichtung verwendet werden.

Die erste und die zweite Antenne dienen der langreichweitigen Daten-Kommunikation mit zumindest einer Leseeinrichtung eines Systems zur Erfassung einer auf dem Kundenmedium abgelegten Zugangsberechtigung bzw. zur Erfassung der Medieninformation des Kundenmediums, zum Auslesen von im Kundenmedium gespeicherten Daten und/oder zum Beschreiben des Kundenmediums. Langreichweitige Daten-Kommunikation im Sinne der Erfindung ist eine Daten-Kommunikation mit einer Reichweite mehr als einem Meter.

Die dritte Antenne ist eine Antenne vorzugsweise für den Bereich um 13,56 MHz, welche mit einem NFC-Modul im integrierten Schaltkreis des Kundenmediums verbunden ist. Das NFC-Modul ist vorzugsweise gemäß dem ISO 18092 Standard und dabei verwendeten Sicherheitsmechanismen ausgeführt und dient im Aktiv-Modus des Kundenmediums der kurzreichweitigen Daten-Kommunikation im Bereich von einigen Zentimetern, beispielsweise mit einem mobilen Kontrollgerät zur Überprüfung der Gültigkeit einer auf dem Kundenmedium abgelegten Zugangsberechtigung oder der Überprüfung von personenbezogenen Daten.

Das Kundenmedium weist demnach einen "Sleep"-Modus, einen Ruhe-Modus und einen Aktiv-Modus auf, wobei im "Sleep"-Modus nur der Operationsverstärker und ein Teil des Mikroprozessorsaktiviert sind. Der Mikroprozessor des Kundenmediums ist im "Sleep"-Modus weitestgehend ausgeschaltet und im Ruhe- und Aktiv-Modus vollständig eingeschaltet, wobei der Transceiver im "Sleep"- und im Ruhe-Modus ausgeschaltet ist und lediglich im Aktiv- Modus eingeschaltet ist. Auf diese Weise wird der Energieverbrauch des Kundenmediums so gering wie möglich gehalten.

Das Kundenmedium weist einen mit dem Mikroprozessor verbundenen integrierten Schaltkreis auf, der zumindest eine crypto-engine umfasst, wobei vorzugsweise drei cryptoengines enthalten sind, beispielsweise für GRAIN 128, GRAIN 128A, 3-DES oder AES-128. Der Mikroprozessor oder das NFC-Modul kann auch in den integrierten Schaltkreis integriert sein.

Im Folgenden wird das erfindungsgemäße Verfahren für den Fall, dass eine Authentifizierung durchgeführt wird und die Kommunikation zwischen der On-Board-Unit und dem Kundenmedium verschlüsselt erfolgt erläutert. Sämtliche Schritte des Verfahrens können jedoch ohne Authentifizierung und ohne Verschlüsselung/Entschlüsselung durchgeführt werden. Ferner kann im Rahmen einer weiteren Ausgestaltung der Erfindung, bei der keine Verschlüsselung oder Authentifizierung vorgesehen ist, die Session-ID die Medieninformation des Kundenmediums sein, beispielsweise eine eineindeutige Nummer, die gleich nach dem Übergang in den Aktiv- Modus an den Rechner geschickt wird.

Gemäß einer bevorzugten Ausgestaltung der Erfindung ist vorgesehen, dass das Kundenmedium nach der Authentifizierung eine verschlüsselte Medieninformation sendet, welche über zumindest eine Leseeinrichtung empfangen und mit der Leseeinrichtungs-ID und optional der Signalstärke, mit der das Signal von der Leseeinrichtung empfangen worden ist, ergänzt und an die On-Board-Unit weitergeleitet wird. In der On-Board-Unit wird die Medieninformation entschlüsselt und verarbeitet, wobei eine Bestätigung enthaltend einen Zeitstempel und die Dauer bis zur nächsten Kontaktaufnahme zum Senden der nächsten verschlüsselten und signierten Medieninformation an die On-Board-Unit über die Leseeinrichtungen ausgesendet wird. Anhand der Medieninformation kann ermittelt werden, ob die dem Kundenmedium eineindeutig zugeordnete Person die Berechtigung zur Fahrt mit dem Verkehrsmittel erlangt hat.

In vorteilhafter Weise kann die vorgegebene Dauer bis zur nächsten Kontaktaufnahme dynamisch angepasst werden, um auf diese Weise beispielsweise der Verkehrssituation für den Fall eines Busses oder der Haltestellendichte, für den Fall einer Straßenbahn oder eines Zuges, Rechnung zu tragen. Hierbei kann vorgesehen sein, dass die Bestätigung über alle Leseeinrichtungen des Fahrgastraums mit einem leichten zeitlichen Versatz ausgestrahlt wird, wodurch gewährleistet wird, dass das Kundenmedium die Bestätigung mit einer hohen Wahrscheinlichkeit empfängt. Die Bestätigung ist für jedes Kundenmedium individuell verschlüsselt, wodurch gewährleistet wird, dass nur dasjenige Kundenmedium die Bestätigung erhält, welches seine Identität gesendet hat. Auf diese Weise wird nur dieses eine Kundenmedium in einen Ruhemodus versetzt.

Das Kundenmedium empfängt die Bestätigung und geht in einen Ruhemodus über, in dem der Energieverbrauch sehr gering ist, wobei der Wechsel in den Ruhemodus die erfolgte Authentifizierung nicht löscht. Nach der vorgegebenen Dauer bis zur nächsten Kontaktaufnahme geht das Kundenmedium in den Aktiv Modus über und sendet seine Medieninformation verschlüsselt und optional signiert an die On-Board-Unit über zumindest eine Leseeinrichtung.

Das entsprechende Signal des Kundenmediums wird von mindestens einer Leseeinrichtung erfasst und an die On-Board-Unit weitergeleitet, wobei der Empfang der Identität des Kundenmediums mit dem erneuten Aussenden einer Bestätigung, die von der On-Board-Unit generiert und von den Leseeinrichtungen gesendet wird, beantwortet wird.

Nach Empfang der Bestätigung wird das Kundenmedium in den Ruhemodus versetzt, aus dem er nach dem vorgegebenen Zeitintervall zurückkehrt, um sich erneut mit der verschlüsselten und optional signierten Identität über die Leseeinrichtungen bei der On-Board-Unit zu melden. Der pro Antwort der Leseeinrichtung inkrementierte Zeitstempel dient neben Sortieraufgaben der Signaturberechnung, da dadurch die Einzigartigkeit der Signatur gewährleistet wird, wie bereits erläutert.

Die beschriebene Vorgehensweise wiederholt sich bis zum Wechsel des Kundenmediums in den Sleep-Modus, was dann erfolgt, wenn es dem Kundenmedium nach einer vorgegebenen Anzahl von Versuchen nicht gelingt, eine Bestätigung auf das Aussenden der verschlüsselten Medieninformation von der On-Board-Unit zu erhalten.

Dies kann für den Fall, dass sich das Kundenmedium im Verkehrsmittel befindet, dadurch verursacht werden, dass die Kanalwahl zwischen dem Kundenmedium und den Leseeinrichtungen nicht übereinstimmt, dass sich die On-Board-Unit in einer Aufweck-Phase für weitere Kundenmedien befindet und auf andere Kanäle geschaltet ist oder dass eine Kollision mit einem anderen Sender erfolgt ist. Ferner kann dies dadurch verursacht werden, dass sich das Kundenmedium nicht mehr im Verkehrsmittel befindet.

Wenn also das Kundenmedium innerhalb einer vorgegebenen Zeitdauer keine Bestätigung von der On-Board-Unit erhält, wird die verschlüsselte Medieninformation erneut gesendet, wobei wenn das Kundenmedium nach einer vorgegebenen Anzahl von Versuchen nach jeweils einer vorgegebenen Zeitdauer keine Bestätigung auf das Aussenden der verschlüsselten Medieninformation von der On-Board-Unit erhält, das Kundenmedium in den "Sleep"-Modus übergeht. Im Rahmen des Verfahrens entspricht diese Situation dem Verlassen des Verkehrsmittels seitens der Person, der das Kundenmedium zugeordnet ist.

Das erneute Senden der Medieninformation erfolgt in dem gleichen Intervall d.h. Zeitabstand, wie zuvor von der On-Board-Unit bestimmt oder in anderen, meist kürzeren Abständen. Dies erhöht die Wahrscheinlichkeit, dass es bei einer Kommunikations-Kollision rasch zum gültigen erneuten Erfassen des Kundenmediums kommt und das Kundenmedium nicht versehendlich in den Sleep-Modus versetzt wird.

Für den Fall, dass das Kundenmedium in einen Sleep-Modus versetzt worden ist, kann es nur mit einem erneuten Wake-Up-Signal und anschließender erneuter gegenseitiger Authentifizierung, wie bereits erläutert, erfasst und registriert werden, wobei die erneute Registrierung eine erneute, unterschiedliche Verschlüsselung und optional Signierung aufweist. Folglich gilt eine bestimmte Verschlüsselung und Signierung lediglich für ein Kundenmedium und für eine Registrierung. Die Registrierung hält an, solange das Kundenmedium nicht in einen Sleep-Modus versetzt wird. Ein Wake-Up-Signal kann nur im Sleep-Modus verarbeitet werden.

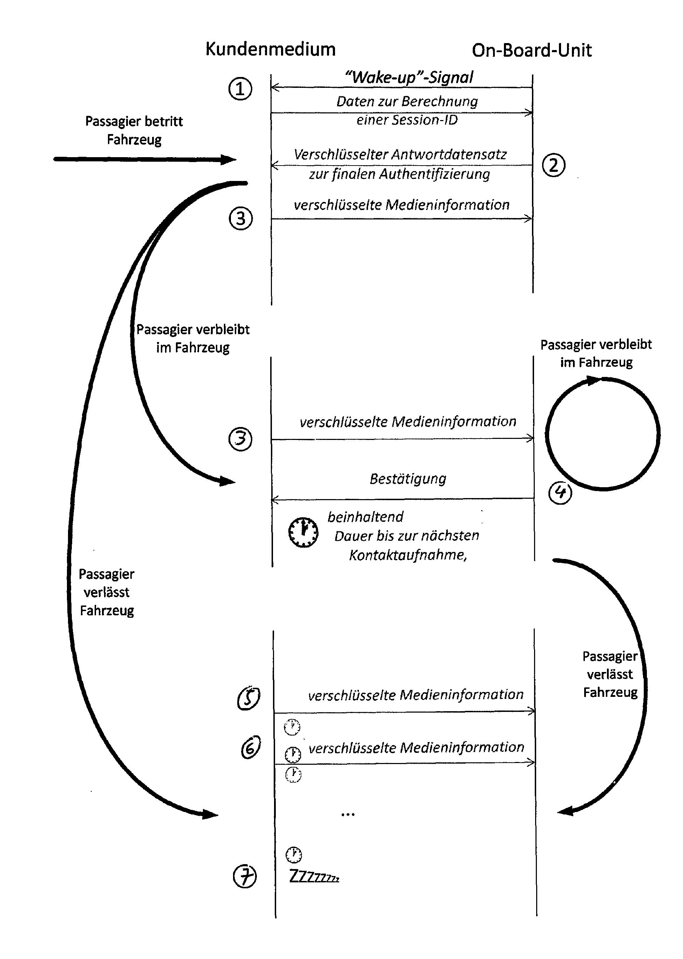

Bei dem in der beigefügten Figur gezeigten Beispiel empfängt nach dem Betreten des Verkehrsmittels seitens einer Person mit einem Kundenmedium das sich im Sleep-Modus befindliche Kundenmedium ein Wake-up-Signal, was von der On-Board-Unit über die vorgesehenen Leseeinrichtungen gesendet wird und geht bei einem als gültig erkannten Wake-Up-Signal in den Aktiv- Modus über, wobei anschließend vom Kundenmedium Daten zur Berechnung einer Session- ID an die On-Board-Unit gesendet werden (Schritt 1). Die On-Board-Unit sendet nach Empfang dieser Daten einen verschlüsselten Datensatz zur finalen Authentifizierung (Schritt 2), wobei anschließend vom Kundenmedium eine verschlüsselte Medieninformation gesendet wird, die von der On-Board-Unit über zumindest eine Leseeinrichtung empfangen wird (Schritt 3). Die On-Board-Unit empfängt die Medieninformation und sendet eine Bestätigung, die, wenn die Person im Verkehrsmittel verbleibt, vom Kundenmedium empfangen wird (Schritt 4). Die Bestätigung enthält die Dauer bis zur nächsten Kontaktaufnahme seitens des Kundenmediums. Wenn die Person im Verkehrsmittel verbleibt wiederholen sich die Schritte 3 und 4 bis die Person das Verkehrsmittel verlässt, wobei in diesem Fall das Kundenmedium nach mehrmaligem Senden der Medieninformation (Schritte 5, 6) keine Bestätigung von der On-Board-Unit empfangen kann und in den Sleep-Modus übergeht (Schritt 7). Für den Fall, dass die Person nach erfolgter Authentifizierung und ggf. Senden der Medieninformation das Verkehrsmittel verlässt, kann das Kundenmedium keine Bestätigung von der On-Board-Unit empfangen und geht ebenfalls in den Sleep-Modus über (Schritt 7).

Für die Daten-Übertragung zwischen Kundenmedium und Leseeinrichtungen werden vorzugsweise im 2,4 GHz ISM-Band mehrere "advertising channels" zur Kontaktaufnahme und mehrere "communication channels" zur Daten-Kommunikation verwendet.

Das Wake-Up-Signal ist ein Signal z.B. im 2,4 GHz Bereich und wird auf einem von ggf. mehreren, vorzugsweise drei "advertising channels" gesendet. Die Daten zur Berechnung der Session-ID werden nach erkanntem, gültigen Wake-Up-Signal und Übergang des Kundenmediums in den Aktiv-Modus ebenfalls auf einem der "advertising channels" gesendet, wodurch das Kundenmedium einen Kommunikations-Kanal vorschlägt.

Der zugrundeliegende Algorithmus ist derart konzipiert, dass Kollisionen hinsichtlich des Kommunikations-Kanals stochastisch vermieden werden können.

Anschließend wartet das Kundenmedium für eine vorgegebene Zeit im Empfangs-Modus auf eine Antwort, wobei die vorgegebene Zeit vorzugsweise dem 10 fachen der Sendezeit entspricht, wodurch der On-Board-Unit ausreichend Zeit für einen zeitlichen Überlapp mit dem Aussendeintervall des Kundenmediums zum Empfang der Session-ID eingeräumt wird.

Wenn ein Kundenmedium nach dieser Zeit keine Antwort empfangen hat, wechselt es in den nächsten "advertising channel" und die Daten zur Berechnung einer Session-ID werden erneut gesendet, wobei dies wiederholt wird, bis ein Antwortsignal über eine Leseeinrichtung empfangen wird und die Authentifizierung startet.

Wenn auf allen vorgesehenen "advertising channels" vergeblich versucht wurde, den Kontakt zur On-Board-Unit herzustellen geht das Kundenmedium in den Ruhe-Modus über, um nach einer vorgegebenen Zeit erneut Daten für die Berechnung einer Session-ID zu senden.

Nach dem Aussenden des Wake-Up-Signals werden von der Leseeinrichtung, die das Signal gesendet hat, die "advertising channels" überwacht, wobei die Leseeinrichtung nach einer vorgegebenen Wartezeit von einem Kanal zu dem nächsten wechselt. Hierbei ist die Dauer des Zeitfensters zum Abhören der Kanäle für die Leseeinrichtungen so angepasst, dass bei genügender Anzahl von Leseeinrichtungen mindestens eine Leseeinrichtung pro advertising channel in einem Abhör-Modus ist, was eine schnelle Kundenmediendetektion und -authentifizierung ermöglicht.

Wenn ein Kundenmedium entdeckt wird, d.h. wenn die die Daten zur Berechnung einer Session-ID empfangen worden sind, beginnt die Authentifizierung, wobei Kundenmedium und Leseeinrichtungen in einen zugehörigen "communication channel" wechseln. Die anschließende Kommunikation zwischen Kundenmedium und Leseeinrichtungen erfolgt in einem der "communication channels", wobei vorzugsweise 5 "communication channels" vorgesehen sind.

Im Rahmen einer Weiterbildung der Erfindung ist es auch möglich, über die Bestätigung der Erfassung des Kundenmediums Informationen auf das Kundenmedium zurück zu senden, die beispielsweise auf einem Display des Kundenmediums angezeigt werden können.

Durch die beschriebene Konzeption wird ein Kundenmedium innerhalb eines gewissen Zeitraumes räumlich erfasst, wobei pro Kundenmedium eine Reihe von Datensätzen erzeugt wird, enthaltend zumindest die Urzeit der Erfassung, die Identität des Kundenmediums (beispielsweise eine vorzugsweise auch verschlüsselte Kundemedium ID-Nummer), die ID-Nummer der Leseeinrichtung, über die das Signal des Kundenmediums empfangen worden ist, die Signalstärke, mit der das Signal von der Leseeinrichtung empfangen worden ist und insbesondere für den Fall einer Kommunikation in einem hohen GHz Bereich (z.B. 3 bis 8- GHz) optional die Laufzeit des Signals.

Für die Ermittlung einer Laufzeit werden die Verzögerungen in der Antwort zwischen On-Board-Unit und Kundenmedium bzw. vice-versa ausgewertet.

Die Reihe der Datensätze beginnt mit der Authentifizierung und endet mit dem Erlöschen der Authentifizierung, wobei sie nach einer erneuten Authentifizierung ungeachtet einer geänderten Verschlüsselung und Signierung fortgesetzt wird. Hierbei ist möglich, einzelne Datensätze mit unterschiedlicher Authentifizierung auch nachgelagert zusammenzuführen.

Anhand der Datensätze ergibt sich ein Protokoll der Aufenthaltsorte eines Kundenmediums in der Nähe von bestimmten Leseeinrichtungen als Funktion der Zeit.

Es ist ersichtlich, dass die Reihe der Datensätze Datensätze umfassen kann, die sich lediglich in der ID der Leseeinrichtung unterscheiden, wobei die Datensätze vorzugsweise nach dem Zeitpunkt der Erfassung und gegebenenfalls nach der ID der Leseeinrichtung, über die das Signal des Kundenmediums empfangen worden ist, sortiert werden. Auf diese Weise wird pro Kundenmedium und On-Board-Unit, das heißt pro Kundenmedium und Fahrgastraum bzw. Wagen eine Reihe von lokalen Ortsrohdaten erzeugt und vorzugsweise in der Haupt-On-Board-Unit gespeichert.

Für den Fall, dass das Verkehrsmittel mehrere Fahrgasträume oder Wagen umfasst, erfolgt die geschilderte Erfassung eines Kundenmediums pro Fahrgastraum wie beschrieben, wobei als Fahrgastraum in Sinne der Erfindung ein Raum definiert ist, dem eine On-Board-Unit mit daran angeschlossenen Leseeinrichtungen zugeordnet ist. Die On-Board-Units sind miteinander, vorzugsweise drahtlos, zum Zweck der Datenkommunikation verbunden. Beispielsweise kann die Verbindung zur Datenkommunikation über ein GSM-Netz oder über eine WLAN-Verbindung oder weitere Funkstandards erfolgen.

Erfindungsgemäß ist vorgesehen, dass jede On-Board-Unit ihre eigenen Datensätze, wie bereits beschrieben, generiert, wobei die individuellen Datensätze der On-Board-Units pro Kundenmedium und On-Board-Unit an die Haupt-On-Board-Unit übertragen werden, wo sie zu einem einzigen Datensatz pro Kundenmedium, erkannt an der Session ID oder - wahlweise bei Möglichkeit einer Entschlüsselung - an der Medieninformation, z.B. an der Kundenmedium-ID, zusammengeführt werden.

Vorzugsweise erfolgt diese Datenübertragung kontinuierlich bzw. in vorgegebenen Intervallen, so dass die Neben-On-Board-Units keinen großen Speicherplatz zur Zwischenspeicherung der Datensätze benötigen. Dadurch entsteht auch der Vorteil, dass die Datensätze zeitnah und möglichst komplett in der Haupt-On-Board-Unit vorliegen, wo sie geschlossen analysiert oder weitergegeben werden können, wenn sie anhand eindeutiger IDs zusammengeführt werden können. Ist das nicht der Fall, kann die Analyse der Datensätze nach einer weiteren Entschlüsselung der eigentlichen Kundenmedium-ID in einer Datenzentrale erfolgen, an die die Daten von der Haupt-On-Board-Unit übertragen werden.

Bei der Auswertung der Datensätze der lokalen Ortsrohdaten fallen idealerweise mehrere Erfassungen eines Kundenmediums durch unterschiedliche Leseeinrichtungen pro Zeitintervall an, wobei davon ausgegangen wird, dass die lokale Bewegung eines Kundenmediums innerhalb eines Zeitintervalls klein ist und somit, dass ein Kundenmedium in einem Zeitintervall als ortsfest zu betrachtet ist. Da, wie bereits erläutert, die Leseeinrichtungen optional Informationen über die Stärke oder die Laufzeit des vom Kundenmedium empfangenen Signals liefern, lässt sich auf Basis dieser Signale die Entfernung des Kundenmediums zu jeder Leseeinrichtung, die von diesem Kundenmedium ein Signal empfangen hat, abschätzen, wodurch eine genaue Lokalisierung erzielbar ist.

Im 433 MHz-Bereich kann bei freier Sicht zwischen Sender und mehrerer Empfänger eine Ortsgenauigkeit bis zu 1 m erzielt werden, wobei aufgrund der in öffentlichen Verkehrsmitteln oft auftretenden Reflektionen von Signalen die Stärke sowie die Richtung der von den RF-Transceivern der Kundenmedien gesendeten Signale beeinflusst werden, so dass eine Abschätzung der Entfernung des Kundenmediums zu jeder Leseeinrichtung mit einer höheren Unsicherheit behaftet ist. Wendet man statt dieser oder der zunächst vorgeschlagenen Frequenz von 2,45 GHz noch höhere Frequenzen an, so lassen sich auch Laufzeiten anhand der sehr kurzen Impulse genauer messen und bei Auftreten von Mehrfachreflexionen anhand der Signalstärke das relevanteste Signal zur Ortsberechnung bestimmen. Aus diesem Grunde wird vorgeschlagen, insbesondere für den Fall einer Kommunikation in einem Frequenzbereich oberhalb 3 GHz von den Leseeinrichtungen die Laufzeit des Signals des Kundenmediums zu erfassen, um die Entfernung des Kundenmediums zu jeder Leseeinrichtung, die von diesem Kundenmedium ein Signal empfangen hat, genauer abzuschätzen. Die Genauigkeit der Entfernungsmessung zu einer Leseeinrichtung lässt sich damit auf 0,5 m, unter idealen Bedingungen auf 0,2 m oder besser steigern.

Demnach wird für jedes Zeitintervall ein wahrscheinlichster Aufenthaltsort eines Kundenmediums in Bezug auf die Leseeinrichtungen ermittelt, welche die Signale des Kundenmediums in dem jeweiligen Zeitintervall empfangen haben, so dass über eine Kette von Zeitintervallen eine Spur der wahrscheinlichsten Bewegung eines Kundenmediums in einem Verkehrsmittel ermittelt werden kann.

Über die gemittelte Ortsinformation mehrerer Zeitintervalle kann der wahrscheinlichste Aufenthaltsort eines Kundenmediums mit einer höheren Genauigkeit angegeben werden, wobei aus der Betrachtung der wahrscheinlichsten Aufenthaltsorte bestimmt werden kann, ob sich das Kundenmedium eher innerhalb oder außerhalb des Fahrzeugs befindet.

Demnach kann durch Auswertung mehrerer Empfangssignale von unterschiedlichen Leseeinrichtungen pro Zeitintervall eine begrenzte Lokalisierung eines Kundenmediums in einem Verkehrsmittel durchgeführt werden, wodurch erste In/Out-Informationen generiert werden. Durch Betrachtung mehrerer Zeitintervalle gemeinsam kann der wahrscheinlichste Aufenthaltsort eines Kundenmediums in einem Verkehrsmittel genauer angegeben werden, so dass die Verlässlichkeit der In/Out-Informationen steigt. Durch eine Verknüpfung mit äußeren Ortsinformationen des Verkehrsmittels selbst desselben Zeitintervalls kann somit eine globale Weg-Zeit-Information für ein Kundenmedium erstellt werden, wobei sich entlang der Zeitintervalle und/oder der Ortsinformationen des Verkehrsmittels Registrierungsmuster ergeben, welche eine noch genauere Bewertung ermöglichen.

Die lokalen Ortsinformationen betreffend ein Kundenmedium werden mit den globalen Ortsinformationen des Verkehrsmittels als Funktion der Zeit verknüpft, so dass sich für das Kundenmedium eine globale Wegstrecke ergibt. Vorzugsweise werden die lokalen Ortsinformationen über Zeitintervalle gleicher Dauer mit den globalen Ortsinformationen des Verkehrsmittels verknüpft. Wenn sich für eine Grosszahl von Orten entlang der Wegstrecke eine hohe Wahrscheinlichkeit für den Aufenthalt des Kundenmediums im Verkehrsmittel ergibt, ist von einer regulären Mitfahrt in diesem Verkehrsmittel auszugehen, wobei, wenn sich ergibt, dass das Kundenmedium mit höherer Wahrscheinlichkeit außerhalb des Fahrzeuges befunden hat, eine Mitfahrt als eher unwahrscheinlich zu betrachten ist.

Zur Erfassung der globalen Ortsdaten eines Verkehrsmittels werden entlang einer Wegstrecke die Ortskoordinaten des Verkehrsmittels als Funktion der Zeit aufgenommen und Zeitintervallen zugeordnet, wobei die Länge der Zeitintervalle durch die Art des Weges und des Verkehrsmittels und/oder der Verkehrssituation bestimmt wird, und beispielsweise für einen Stadtbus kleiner ist als für einen Zug. Die Länge der Zeitintervalle wird vorzugsweise von der Haupt-On-board-Unit durch geeignete Algorithmen bestimmt und kann dynamisch verändert werden, beispielsweise in Abhängigkeit der Verkehrssituation und des Einsatzes des Verkehrsmittels. Diese Zeitintervalle können auch zur Erfassung der lokalen Ortsdaten eines Kundenmediums herangezogen werden.

Für jeden Weg des Verkehrsmittels werden Ortsinformationen gespeichert, welche Zeitintervallen zugeordnet sind, die eine Wegstrecke in Segmente teilen. Das Schließen der Türen des Verkehrsmittels ist das Startsignal für eine Wegstrecke, wobei die Sammlung der globalen Ortsinformationen für eine Wegstrecke mit dem Erreichen einer Station endet, was durch das Öffnen mindestens einer Tür des Verkehrsmittels bei Stillstand des Verkehrsmittels erkannt wird.

Die Ortsinformationen können beispielsweise über GPS erhalten werden, wobei für den Fall, dass keine GPS-Signale zur Verfügung stehen, Informationen von WLAN-Stationen in Bahnhöfen oder Betriebshöfen oder Haltestellen herangezogen werden. Für den Fall, dass zwischen zwei GPS-Signalen eine längere Zeit verstrichen ist, kann zwischen den entsprechenden GPS-Orten ein Weg interpoliert werden.

Alternativ oder zusätzlich zu den WLAN-Informationen können Ortsinformationen auch anhand von GSM-Netzwerken ermittelt werden. Weiterhin können auch Daten aus einer Trägheitsnavigation verwendet werden. Hierbei ist es möglich, aus der Kenntnis eines Startpunktes, der Geschwindigkeit und der Beschleunigung als Funktion der Zeit die entsprechenden Ortsinformationen zu ermitteln. Diese Systeme sind mittlerweile auf Basis von Halbleiter-Produkten günstig und zuverlässig herstellbar.

## Patentansprüche

1. Verfahren zur fortlaufenden Erfassung der Anwesenheit einer Person in einem öffentlichen Verkehrsmittel, wobei der Person ein Kundenmedium zugeordnet ist, welches einen RF-Transceiver umfasst, wobei im Verkehrsmittel pro Fahrgastraum bzw. Wagen zumindest eine Leseeinrichtung zur Datenkommunikation mit den Kundenmedien vorgesehen ist, welche mit einem als On-Board-Unit dienenden Computer zum Zweck der Datenkommunikation verbunden ist, wobei für den Fall, dass mehrere Leseeinrichtungen vorgesehen sind, diese auch miteinander verbunden sind, wobei wenn mehrere Fahrgasträume oder Wägen vorhanden sind, einem Fahrgastraum oder Wagen eine als Haupt-On-Board-Unit dienende On-Board-Unit zugeordnet ist und den anderen Fahrgasträumen oder Wägen als Neben-On-Board-Units dienende On-Board-Units zugeordnet sind, die mit der Haupt-On-Board-Unit zum Zweck der Datenkommunikation verbunden sind, wobei sich das Kundenmedium beim Betreten des Verkehrsmittels in einem "Sleep"-Modus befindet, um den Energieverbrauch möglichst gering zu halten, umfassend folgende Schritte:
a) Senden eines "Wake-up"-Signals über die On-Board-Unit des Fahrgastraums in regelmäßigen Intervallen, welches sequentiell von allen Leseeinrichtungen, welche mit der On-Board-Unit verbunden sind, ausgestrahlt wird;
b) Empfangen des "Wake-Up-Signals" vom Kundenmedium und bei einem als gültig erkannten "Wake-up" - Signal Aktivieren des Kundenmediums, welches den Sleep-Modus verlässt und in einen Aktiv-Modus übergeht;
c) Senden von Daten zur Berechnung einer Session-ID vom Kundenmedium, welche von der zumindest einen Leseeinrichtung empfangen und über das Bussystem, über das die zumindest eine Leseeinrichtung mit der On-Board-Unit verbunden ist, an die On-Board-Unit im Fahrgastraum gesendet werden, wobei von der zumindest einen Leseeinrichtung ein Zeitstempel an das Kundenmedium übermittelt wird;
d) bei vorhandener Session- ID, Senden einer Medieninformation vom Kundenmedium;
e) Empfangen der Medieninformation über zumindest eine Leseeinrichtung und Ergänzen der empfangenen Information mit der Leseeinrichtungs-ID und Weiterleiten dieser Informationen an die On-Board-Unit;
f) Verarbeiten der Medieninformationen in der On-Board-Unit und Aussenden einer Bestätigung enthaltend einen neuen Zeitstempel;
g) Empfangen der Bestätigung vom Kundenmedium und Übergang des Kundenmediums in einen Ruhe-Modus;
h) Übergang des Kundenmediums nach einem Zeitintervall vorgegebener Dauer bis zur nächsten Kontaktaufnahme in den Aktiv Modus und Senden der Medieninformation an die On-Board-Unit über zumindest eine Leseeinrichtung;
i) Wiederholen der Schritte e) bis g) bis die Medieninformation von keiner Leseeinrichtung empfangen wird, wodurch ein Verlassen des Verkehrsmittels seitens der Person, der das Kundenmedium zugeordnet ist, erkannt wird, wobei das Kundenmedium in den Sleep-Modus übergeht und wobei, wenn das Kundenmedium in den Sleep-Modus übergegangen ist, es nur mit einem erneuten Wake-Up-Signal erfasst und registriert werden kann;
j) Erzeugen einer Reihe von Datensätzen, enthaltend zumindest die Uhrzeit der Erfassung des Kundenmediums, die Identität des Kundenmediums, die ID-Nummer der Leseeinrichtung, über die das Signal des Kundenmediums empfangen worden ist, wobei die Reihe der Datensätze mit dem ersten Empfang der Medieninformation beginnt und mit dem letzten erfolgten Empfang der Medieninformation endet, wobei sie nach einer erneuten Erfassung und Registrierung fortgesetzt wird und wobei sich anhand der Datensätze ein Protokoll der Aufenthaltsorte eines Kundenmediums in der Nähe von bestimmten Leseeinrichtungen als Funktion der Zeit ergibt.

2. Verfahren nach Anspruch 1, **dadurch gekennzeichnet, dass** wenn das Kundenmedium innerhalb einer vorgegebenen Zeitdauer keine Bestätigung von der On-Board-Unit erhält, die Medieninformation erneut gesendet wird, wobei, wenn das Kundenmedium nach einer vorgegebenen Anzahl von Versuchen nach jeweils einer vorgegebenen Zeitdauer keine Bestätigung auf das Aussenden der Medieninformation von der On-Board-Unit erhält, das Kundenmedium in den "Sleep"-Modus übergeht.

3. Verfahren nach Anspruch 1 oder 2 , **dadurch gekennzeichnet, dass** für den Fall, dass das Kundenmedium in den "Sleep"-Modus übergegangen ist, das Kundenmedium nur mit einem erneuten Wake-Up-Signal erfasst werden kann , wobei ein Wake-Up-Signal nur im "Sleep"-Modus verarbeitet werden kann.

4. Verfahren nach Anspruch 1, 2 oder 3, **dadurch gekennzeichnet, dass** das Zeitintervall der Dauer bis zur nächsten Kontaktaufnahme dynamisch angepasst wird.

5. Verfahren nach Anspruch 1, 2, 3 oder 4, **dadurch gekennzeichnet, dass** davon ausgegangen wird, dass ein Kundenmedium in einem Zeitintervall der Dauer bis zur nächsten Kontaktaufnahme als ortsfest zu betrachten ist und dass für jedes Zeitintervall ein wahrscheinlichster Aufenthaltsort eines Kundenmediums in Bezug auf die Leseeinrichtungen ermittelt wird, welche die Signale des Kundenmediums in dem jeweiligen Zeitintervall empfangen haben, so dass über eine Kette von Zeitintervallen eine Spur der wahrscheinlichsten Bewegung eines Kundenmediums in einem Verkehrsmittel ermittelt wird, wobei über die gemittelte Ortsinformation mehrerer Zeitintervalle der wahrscheinlichste Aufenthaltsort eines Kundenmediums ermittelt wird, derart, dass aus der Betrachtung der wahrscheinlichsten Aufenthaltsorte bestimmt werden kann, ob sich das Kundenmedium eher innerhalb oder außerhalb des Fahrzeugs befindet.

6. Verfahren nach Anspruch 1, 2, 3, 4 oder 5, **dadurch gekennzeichnet, dass** für den Fall, dass das Verkehrsmittel mehrere Fahrgasträume oder Wägen umfasst, jede On-Board-Unit ihre eigenen Datensätze generiert, wobei die individuellen Datensätze der On-Board-Units pro Kundenmedium und On-Board-Unit an die Haupt-On-Board-Unit übertragen werden, wo sie zu einem einzigen Datensatz pro Kundenmedium zusammengeführt werden.

7. Verfahren nach Anspruch 1, 2, 3, 4, 5 oder 6, **dadurch gekennzeichnet, dass** die lokalen Ortsinformationen betreffend ein Kundenmedium mit den globalen Ortsinformationen des Verkehrsmittels als Funktion der Zeit verknüpft werden, so dass sich für das Kundenmedium eine globale Wegstrecke ergibt, wobei wenn sich für eine Grosszahl von Orten entlang der Wegstrecke eine hohe Wahrscheinlichkeit für den Aufenthalt des Kundenmediums im Verkehrsmittel ergibt, von einer regulären Mitfahrt in diesem Verkehrsmittel ausgegangen wird.

8. Verfahren nach Anspruch 7, **dadurch gekennzeichnet, dass** die lokalen Ortsinformationen betreffend ein Kundenmedium mit den globalen Ortsinformationen des Verkehrsmittels über Zeitintervalle gleicher Dauer verknüpft werden.

9. Verfahren nach Anspruch 7 oder 8, **dadurch gekennzeichnet, dass** zur Erfassung der globalen Ortsdaten des Verkehrsmittels entlang einer Wegstrecke die Ortskoordinaten des Verkehrsmittels als Funktion der Zeit aufgenommen und Zeitintervallen zugeordnet werden, wobei die Länge der Zeitintervalle durch die Art des Weges, des Verkehrsmittels und/oder der Verkehrssituation bestimmt wird.

10. Verfahren nach Anspruch 7, 8 oder 9, **dadurch gekennzeichnet, dass** für jeden Weg des Verkehrsmittels Ortsinformationen gespeichert werden, welche Zeitintervallen zugeordnet sind, die entlang von Wegstrecken segmentiert sind, wobei das Schließen der Türen des Verkehrsmittels das Startsignal für eine Wegstrecke ist und wobei die Sammlung der globalen Ortsinformationen für eine Wegstrecke mit dem Erreichen einer Station endet, was durch das Öffnen mindestens einer Tür des Verkehrsmittels bei Stillstand des Verkehrsmittels erkannt wird.

11. Verfahren nach Anspruch 7, 8, 9 oder 10, **dadurch gekennzeichnet, dass** die Ortsinformationen über GPS erhalten werden, wobei für den Fall, dass keine GPS-Signale zur Verfügung stehen, Informationen von WLAN-Stationen in Bahnhöfen oder Betriebshöfen oder Haltestellen herangezogen werden und wobei für den Fall, dass zwischen zwei GPS-Signalen eine längere Zeit verstrichen ist, zwischen den entsprechenden GPS-Orten ein Weg interpoliert wird.

12. Verfahren nach Anspruch 11, **dadurch gekennzeichnet, dass** alternativ oder zusätzlich zu den WLAN-Informationen Ortsinformationen anhand von GSM-Netzwerken oder Trägheitsnavigationsgeräten ermittelt werden.

13. Verfahren nach einem der vorangehenden Ansprüche, **dadurch gekennzeichnet, dass** das Kundenmedium eine eigene Stromversorgung aufweist.

14. Verfahren nach einem der vorangehenden Ansprüche 1-12, **dadurch gekennzeichnet, dass** das Kundenmedium derart ausgeführt ist, dass es über einen HF-Puls mit Energie geladen wird und anschließend für eine vorgegebene Zeit autark arbeiten kann.

15. Verfahren nach Anspruch 14, **dadurch gekennzeichnet, dass** das "Wake -Up Signal" im HF-Puls enthalten ist.

16. Verfahren nach Anspruch 14 oder 15, **dadurch gekennzeichnet, dass** in regelmäßigen, vorgegebenen Zeitintervallen von der zumindest einen Leseeinrichtung ein HF-Signal ausgestrahlt wird, um die sich in Reichweite befindlichen Kundenmedien mit Energie zu versorgen.

17. Verfahren nach einem der vorangehenden Ansprüche, **dadurch gekennzeichnet, dass** nach dem Senden der Daten zur Berechnung einer Session-ID vom Kundenmedium, welche von der zumindest einen Leseeinrichtung empfangen und über das Bussystem, über das die zumindest eine Leseeinrichtung mit der On-Board-Unit verbunden ist, an die On-Board-Unit im Fahrgastraum gesendet werden, in einem nächsten Schritt eine gegenseitige Authentifizierung zwischen der On-Board-Unit und dem Kundenmedium durchgeführt wird, so dass dieses Kundenmedium in der On-Board-Unit als bekannt und authentifiziert markiert ist, wobei bei einem Übergang vom Aktiv-Modus in den Ruhe-Modus die erfolgte Authentifizierung nicht gelöscht wird, wobei die Authentifizierung bei einem Übergang in den Sleep-Modus gelöscht wird, wobei, wenn das Kundenmedium in den Sleep-Modus übergegangen ist, es nur mit einem erneuten Wake-Up-Signal und anschließender erneuter gegenseitiger Authentifizierung erfasst und registriert werden kann.

18. Verfahren nach Anspruch 17, **dadurch gekennzeichnet, dass** nach Abschluss der gegenseitigen Authentifizierung die Kommunikation zwischen der On-Board-Unit und dem Kundenmedium verschlüsselt und optional signiert erfolgt, wobei die Verschlüsselung und Signatur für jedes Kundenmedium unterschiedlich ist und wobei nach einer erneuten Authentifizierung die erneute Registrierung eine erneute, unterschiedliche Verschlüsselung und ggf. Signierung aufweist.

19. Verfahren nach einem der vorangehenden Ansprüche, **dadurch gekennzeichnet, dass** nach dem Empfang der Medieninformation über zumindest eine Leseeinrichtung, diese zusätzlich mit der Signalstärke, mit der das Signal von der Leseeinrichtung empfangen worden ist und für den Fall einer Kommunikation in einem hohen GHz Bereich mit der Laufzeit des Signals ergänzt wird bevor sie an die On-Board-Unit weitergeleitet wird, wobei diese Informationen in den erzeugten Datensätzen enthalten sind.

20. Verfahren nach einem der vorangehenden Ansprüche, **dadurch gekennzeichnet, dass** nach der Verarbeitung der Medieninformationen in der On-Board-Unit die Bestätigung enthaltend einen neuen Zeitstempel zusätzlich die Dauer bis zur nächsten Kontaktaufnahme seitens des Kundenmediums enthält.
